# EUROPEAN PATENT APPLICATION

(11) **EP 2 642 370 A1**
(43) Date of publication of application: **25.09.2013**
(21) Application number: 13157307.3
(22) Date of filing: 28.02.2013
(51) Int. Cl.: G06F 3/01

(54) **Display method and apparatus for an electronic device**

(30) Priority: 21.03.2012 KR 20120028634
(71) Applicant: Samsung Electronics Co., Ltd, Gyeonggi-do 443-742 (KR)
(72) Inventor: Davie, Michael Andrew, Seoul (KR); Park, Jin, Gyeonggi-do (KR); Kim, Dong-Young, Seoul (KR); Kim, Jong-Seok, Seoul (KR)
(74) Representative: Gover, Richard Paul

(57) **Abstract**

A display method for an electronic device, the method comprising displaying visual content which includes one or more objects intended for emphasis on a flexible screen; and deforming at least part of the flexible screen on which the one or more objects intended for emphasis are displayed.

## Description

### TECHNICAL FIELD OF THE INVENTION

The present disclosure generally relates to a method and apparatus for displaying information on an electronic device. More particularly, the present disclosure relates to a method and apparatus for presenting a scene with emphasized effect on an electronic device.

### BACKGROUND OF THE INVENTION

A variety of ways to make the interface between a user and an electronic device easier and more convenient have been used. In recent years, a haptic function has been applied which considers a user's intuitive experience of interfaces diversifies user feedback when using a touch input. Advantageously, haptic functions make it easy for users to operate Information Telecommunication (IT) devices and user recognition of haptic functions is high. Due to such merits, haptic functions have been widely used in various fields such as industry, traffic, service, medical, mobile devices and the like.

Generally, a haptic function employs a structure in which a touch panel having transparency is arranged to closely adhere to an image display apparatus and, when a user views an image through the touch panel and presses and manipulates the touch panel, a vibration generating means such as a vibration motor or a piezoelectric actuator generates and applies a vibration to the touch panel, whereby the vibration is sensed by the user through the touch panel.

On the other hand, in recent years, flexible displays have been highlighted as a new technology in the display field. Because a flexible display is realized in a thin substrate such as a plastic substrate and the like, the flexible display does not get damaged even when folded or rolled up like paper. At present, the conventional art realizes a flexible display using one of a Liquid Crystal Display (LCD) with a Thin Film Transistor (TFT), an Organic Light Emitting Display (OLED) and the like.

However, presently, haptic functions have been used to make a user recognize that a touch input has been detected, but they have yet been used to provide a visual and tactile sensation function for a flexible display.

Accordingly, there is a need for a technique for providing a more stereoscopic scene to the user using a haptic function and a flexible display.

### SUMMARY OF THE INVENTION

To address the above-discussed deficiencies of the prior art, it is an aim of certain embodiments of the present invention to provide a display method and apparatus for an electronic device.

Another aim of certain embodiments of the present invention is to provide a display method and apparatus for displaying an emphasis effect on an electronic device with a flexible display.

A further aim of certain embodiment of the present invention is to provide a tagging method and apparatus for displaying a scene with emphasis effect on an electronic device with a flexible display.

The above aims are achieved in certain embodiments of the present invention by providing a display method and apparatus for an electronic device.

According to a first aspect of the present invention there is provided, a display method for an electronic device, the method comprising: displaying visual content which includes one or more objects intended for emphasis on a flexible screen; and deforming at least part of the flexible screen on which the one or more objects intended for emphasis are displayed.

The visual content may comprise a web page displayed on the flexible display through a web browser. Alternatively, or in addition, the visual content may comprise video content.

According to a second aspect of the present invention there is provided an electronic device, comprising: one or more processors; memory; and one or more programs, wherein the one or more programs are stored in the memory and configured to cause, when executed by the electronic device, the electronic device to perform the above method.

According to a further aspect of the present disclosure, an electronic device includes a flexible screen for displaying a video, a memory for storing data and instructions, one or more processors for executing computer programs, and one or more modules stored in the memory and configured to be executable by the one or more processors. The module includes an instruction of displaying a web page which includes at least one or more objects intended for emphasis on the flexible screen through a web browser, and deforming at least region of the flexible screen on which the at least one or more objects intended for emphasis are displayed. Alternatively, the module includes an instruction for playing back video content which includes at least one or more objects intended for emphasis on the flexible screen, and deforming a region of the flexible screen on which the at least one or more objects intended for emphasis are displayed.

Another aspect of the invention provides a computer program comprising instructions arranged, when executed, to implement a method and/or apparatus in accordance with any one of the above-described aspects. A further aspect provides machine-readable storage storing such a program.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a flexible display according to one exemplary embodiment of the present invention;

FIG. 2 is a high-level block diagram illustrating a structure of an electronic device including a flexible display according to another exemplary embodiment of the present invention;

FIG. 3 is a flowchart illustrating a procedure for displaying in an electronic device according to a first exemplary embodiment of the present invention;

FIG. 4 is a flowchart illustrating a procedure for displaying in an electronic device according to a second exemplary embodiment of the present invention;

FIG. 5 is a flowchart illustrating a procedure for displaying in an electronic device according to a third exemplary embodiment of the present invention;

FIGs 6A and 6B illustrate an example of displaying a web page scene according to a first exemplary embodiment of the present invention;

FIGs 7A, 7B and 7C illustrate an example of displaying a website scene according to a second exemplary embodiment of the present invention; and

FIGs 8A, 8B and 8C illustrate an example of displaying a website scene according to a third exemplary embodiment of the present invention.

### DETAILED DESCRIPTION OF THE INVENTION

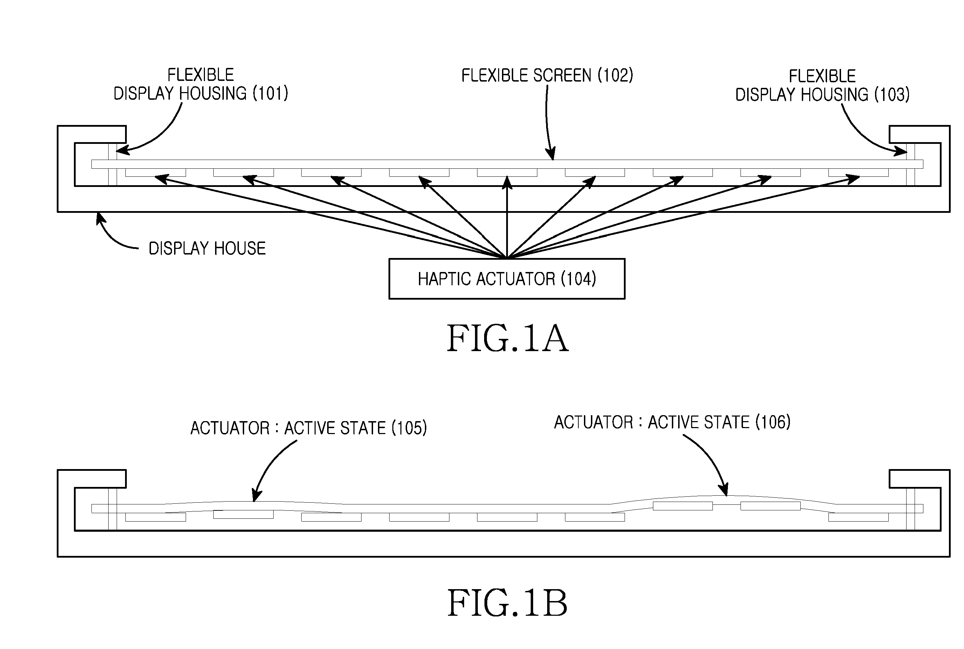

FIGUREs 1 through 8C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electric device. In the following description, well-known functions or constructions are not described in detail since they would obscure the invention in unnecessary detail. Terms described below, which are defined considering functions in the present disclosure, can be different depending on user and operator's intention or practice. Therefore, the terms should be defined on the basis of the disclosure throughout this specification.

Below, the present disclosure describes a display method and apparatus for an electronic device. More particularly, the present disclosure relates to a method and apparatus for presenting a stereoscopic scene using haptic actuators in a portable terminal with a flexible display.

FIGs 1A and 1B illustrate a flexible display according to one exemplary embodiment of the present invention. With reference to FIGs 1A and 1B, the flexible display is of a floating screen structure in which a plurality of haptic actuators 104 and a flexible screen 102 are installed within a display house. That is, as illustrated in FIG. 1A, the plurality of haptic actuators 104 are installed between the flexible screen 102 and the display house.

As illustrated in FIG. 1B, when some of haptic actuators installed under the flexible screen 102 are activated, partial regions 105 and 106 of the flexible screen 102 are deformed convexly corresponding to the activated haptic actuators.

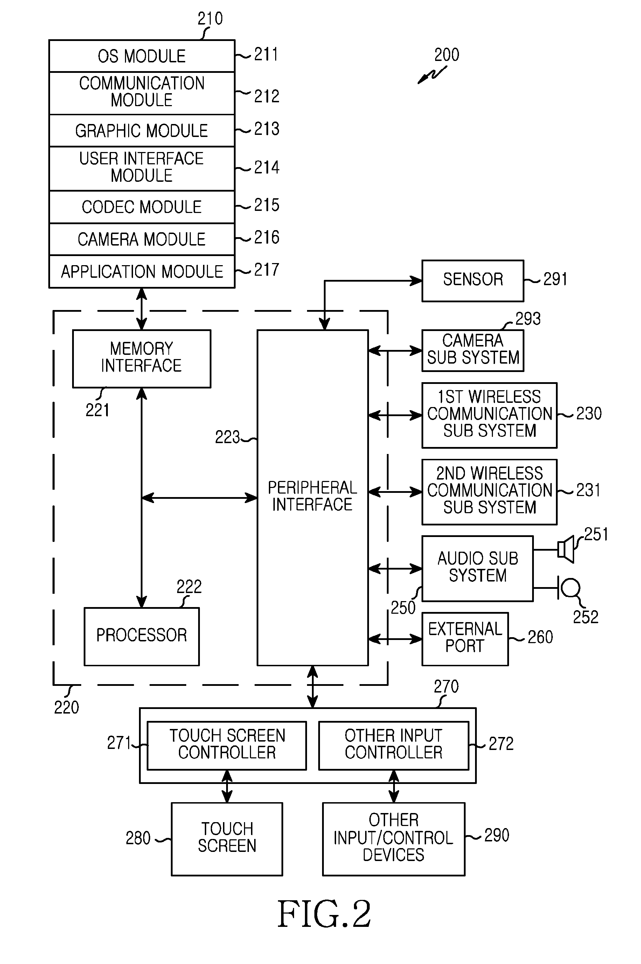

FIG. 2 illustrates a construction of an electronic device including a flexible display according to an exemplary embodiment of the present disclosure.

The electronic device 200 can be any suitable electronic devices equipped with a display screen such as a portable terminal, a mobile phone, a mobile pad, a media player, a tablet computer, a handheld computer, or a Personal Digital Assistant (PDA). Also, the electronic device 200 can be any suitable electronic device having a combination of two or more functions among these devices.

The electronic device 200 includes a memory 210, a processor unit 220, a 1st wireless communication sub system 230, a 2nd wireless communication sub system 231, an audio sub system 250, a speaker 251, a microphone 252, an external port 260, an Input / Output (I/O) sub system 270, a touch screen 280 and other input or control device 290. The memory 210 and the external port 260 can be provided in plural.

The processor unit 220 can include a memory interface 221, one or more processors 222, and a peripheral interface 223. According to some embodiments, the whole processor unit 220 is also called a processor. The memory interface 221, the one or more processors 222, and/or the peripheral interface 223 can be separate constituent elements or can be integrated into one or more integrated circuits.

The processor 222 executes various software programs and performs various functions for the electronic device 200, and also performs processing and control for voice communication and data communication. Also, further to this general function, the processor 222 plays even a role of executing a specific software module (i.e., an instruction set) stored in the memory 210 and performing specific various functions corresponding to the software module. That is, the processor 222 carries out a method of an exemplary embodiment of the present invention in inter-operation with the software modules stored in the memory 210.

In an exemplary embodiment of the present disclosure, when the processor 222 opens a web page, which is composed of various objects such as an image, a text and a link through a web browser such as Internet Explorer, Safari, Opera, Firefox, Google Chrome, and Android Chrome, the processor 222 determines if there are any tagged objects intended for physical emphasis among the objects forming the web page. When there are the objects tagged for physical emphasis, the processor 222 recognizes object shapes and locations for the objects tagged for physical emphasis. The processor 222 sets the intensities and/or states for haptic actuations, corresponding to the objects tagged for physical emphasis, and displays the web page by activating the haptic actuators based on the intensities and/or states. Also, the processor 222 determines the durations of physical emphasis effect for each object tagged on a flexible screen. When there are no physical emphasis effects, the processor 222 resets the actuators to be neutral state. That is, the processor 222 restores the flexible screen which had been deformed convexly according to the objects tagged for physical emphasis, to the original plane state.

In another exemplary embodiment, when the processor 222 plays back video content, the processor 222 determines if there are objects tagged for physical emphasis effect in the visual content. When there is pixel information with physical emphasis effect in visual frame, the processor 222 extracts an object shape and location from the pixel information. For example only and without limitation, the processor 222 extracts a coordinate (x, y, z) and a size information of the object with physical emphasis effect, and duration information of physical emphasis effect from every visual frames.

The processor 222 can include one or more data processors, image processors, or COder/DECoder (CODECs). The data processor, the image processor, or the CODEC can be constructed separately. Also, the data processor, the image processor, or the CODEC can include various processors for performing functions different from one another. The peripheral interface 223 connects the I/O sub system 270 of the electronic device 200 and various peripheral devices thereof to the processor 222 and the memory 210 through the memory interface 221.

Various constituent elements of the electronic device 200 can be coupled with one another by one or more communication buses (not denoted by reference numerals) or stream lines (not denoted by reference numerals) depending on the embodiments.

The external port 260 can used for direct connecting the electronic device 200 to other electronic devices or indirect connecting the electronic device 200 to other electronic devices through a network (for example, the Internet, an intranet, a wireless Local Area Network (LAN) and the like). The external port 260 refers to, for example, a Universal Serial Bus (USB) port or a FIREWIRE port and the like, although not limited to these.

A sensor 291 can coupled to the peripheral interface 223 and enables various functions. For instance, and without limitation, the sensor 291 is coupled to the peripheral interface 223, and can sense a motion of the electronic device 200 and sense a light from the exterior, respectively. In addition, a positioning system and other sensors such as a temperature sensor, a biological sensor and the like can be connected to the peripheral interface 223 and perform related functions.

A camera sub system 293 can perform a camera function such as photograph and video clip recording. Also, the camera sub system 293 can use a Charged Coupled Device (CCD) or Complementary Metal-Oxide Semiconductor (CMOS) device.

A communication function is carried out through one or more wireless communication sub systems 230 and 231. The wireless communication sub systems 230 and 231 can include a radio frequency receiver and transceiver and/or an optical (e.g., infrared) receiver and transceiver. The 1st communication sub system 230 and the 2nd communication sub system 231 can be distinguished according to a communication network in which the electronic device 200 performs communication. For example, the communication network can include a communication sub system designed to operate through a Global System for Mobile Communication (GSM) network, an Enhanced Data GSM Environment (EDGE) network, a Code Division Multiple Access (CDMA) network, a Wireless-Code Division Multiple Access (W-CDMA) network, a Long Term Evolution (LTE) network, an Orthogonal Frequency Division Multiple Access (OFDMA) network, a Wi-Fi network, a WiMAX network or/and a Bluetooth network and the like, although not limited to these. In the embodiment illustrated in FIG. 2, one of the 1st wireless communication system 230 and the 2nd wireless communication sub system 231 can operate through the WiFi network. The 1st wireless communication sub system 230 and the 2nd wireless communication sub system 231 can be integrated into one wireless communication sub system.

The audio sub system 250 can be coupled to the speaker 251 and the microphone 252 and take charge of input and output of an audio stream such as voice recognition, voice copy, digital recording, and calling function. That is, the audio sub system 250 communicates with a user through the speaker 251 and the microphone 252. The audio sub system 250 receives a data stream through the peripheral interface 223 of the processor unit 220, and converts the received data stream into an electric stream. The converted electric stream is forwarded to the speaker 251. The speaker 251 converts the electric stream into a sound wave audible by a person and outputs the converted sound wave. The microphone 252 converts a sound wave received from a person or other sound sources into an electric stream. The audio sub system 250 receives the converted electric stream from the microphone 252. The audio sub system 250 converts the received electric stream into an audio data stream, and transmits the converted audio data stream to the peripheral interface 223. The audio sub system 250 can include a detachable ear phone, head phone or head set.

The I/O sub system 270 can include a touch screen controller 271 and/or other input controller 272. The touch screen controller 271 can be coupled to the touch screen 280. The touch screen 280 and the touch screen controller 271 can detect a touch input, motion of a touch input or removal of a touch input using not only capacitive, resistive, infrared and surface acoustic wave technologies for determining one or more touch points with the touch screen 280 but also an arbitrary multi-touch sensing technology including other proximity sensor arrays or other elements, although not limited to these. The other input controller 272 can be coupled to the other input/control devices 290. One or more buttons (including up/down buttons for adjusting volumes of the speaker 251 and the microphone 252) can be included in the other input/control devices 290. Also, the button can be a push button, a rocker button and the like. The button can be a rocker switch, a thumb-wheel, a dial, a stick, and/or a pointer device such as a stylus and the like.

The touch screen 280 provides input/output interface between the electronic device 200 and the user. That is, the touch screen 280 forwards a user's touch input to the electronic device 200. Also, the touch screen 280 is a medium for displaying an output of the electronic device 200 for the user. That is, the touch screen 280 displays a visual output for the user. This visual output is displayed in a form of a text, a graphic, a video and a combination of them.

In the present disclosure, when an electronic device outputs a web page or a visual frame, the electronic device can present an object stereoscopically through the flexible screen according to tag information for providing emphasis effect to the object, or actuator operating data (e.g., a location, a size of object and a duration of the effect, or pixel information including a coordinate (x, y, z)) in a visual frame.

In one embodiment, this screen can be a touch screen. The touch screen 280 can be one of various displays, for instance, a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED) or a Flexible LED (FLED), although not limited to these.

The memory 210 can be coupled to the memory interface 221. The memory 210 can include one or more high-speed random access memories and/or non-volatile memories such as magnetic disk storage devices, and one or more optical storage devices and/or flash memories (for example, NAND, NOR).

The memory 210 stores software including an Operating System (OS) module 211, a communication module 212, a graphic module 213, a user interface module 214, a CODEC module 215, a camera module 216, one or more application modules 217 and the like. Also, the software can be expressed as a set of instructions and the module is also called an instruction set. The module also can be expressed as program.

Through this specification, one or more modules including instructions performing various methods of the present disclosure can be stored in the memory 210.

The OS software 211 (e.g., a built-in operating system such as WINDOWS, LINUX, Darwin, RTXC, UNIX, OS X, or VxWorks) includes various software constituent elements controlling general system operation. Control of the general system operation means, for example, memory management and control, storage hardware (device) control and management, power control and management and the like. The OS software 211 performs even a function of ensuring smooth communication between various hardware (devices) and software constituent elements (modules).

The communication module 212 can enable communication with other electronic devices such as a personal computer, a server and/or a portable terminal, through the 1st and 2nd wireless communication sub systems 230 and 231 or the external port 260.

The graphic module 213 includes various software constituent elements for providing and displaying a graphic on the touch screen 280. The term 'graphic' includes text, a web page, an icon, a digital image, a video, an animation and the like.

The user interface module 214 includes various software constituent elements associated with a user interface. The user interface module 214 includes information about how a state of the user interface is changed or in which conditions the change of the state of the user interface is carried out, and the like.

The CODEC module 215 can include a software constituent element related to encoding and decoding of a video file. The CODEC module 215 can include a video stream module such as Moving Picture Experts Group (MPEG) module and/or H204 module. Also, the CODE module 215 can include various audio file CODEC modules.

The camera module 216 includes a camera related software constituent element enabling a camera-related process and function. The application module 217 includes a browser, an electronic mail (e-mail) application, an instant messaging application, a word processing application, a keyboard emulation application, an address book, a touch list, a widget, a Digital Right Management (DRM) application, a voice recognition application, a voice copy application, a location determining function, a location-based service and the like. The memory 210 can include additional modules (i.e., instructions) besides the above-mentioned modules, or some of the above-mentioned modules can be omitted.

Also, various functions of the electronic device 200 according to the present disclosure mentioned above or to be mentioned below can be executed by hardware including one or more stream processing device or one or more Application Specific Integrated Circuits (ASICs), software or a combination of them.

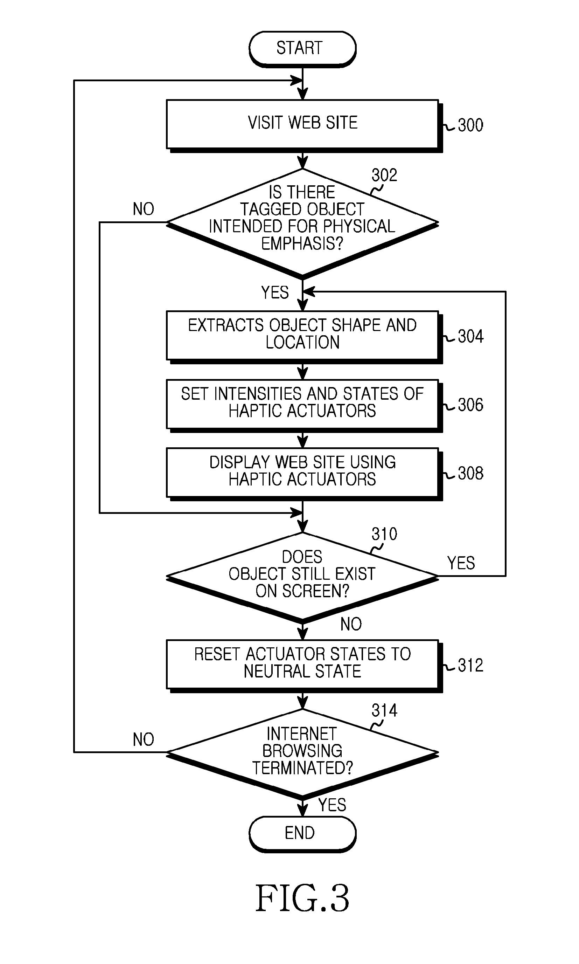

FIG. 3 illustrates a display procedure for an electronic device according to a first exemplary embodiment of the present invention. With reference to FIG. 3, in step 300, the electronic device makes a visit to a website, and opens a web page, which is composed of various objects such as an image, a text, and a link, through a web browser, for instance one of Internet Explorer, Safari, Opera, Firefox, Google Chrome, and Android Chrome. After that, the electronic device proceeds to step 302 and judges if there are tagged objects intended for physical emphasis among the objects constructing the web page.

According to an embodiment of the present invention a new tag for activating haptic actuators to physically deform a flexible screen and to physically trigger a 3-Dimensional (3D) effect is included made within a Hyper Text Markup Language 5 (HTML5) code composing the web page.

For example, HTML5 tags for physically screen-deforming and emphasizing an image and a text within the web page can be composed as in Table 1 below.

**Table 1**

| Image |
|---|
| <haptic imgsrc= 'http://www.website.com/image.gif' width= '100' height= '100' level= "1" /> |

| Text |
|---|
| <haptic level= "2" > Title of Menu </haptic> |

In this embodiment, the haptic actuators are activated with an intensity corresponding to "level=1" for the image, and as a result, the image of "image.gif" with a 100×100 size in "http://www.website.com" is presented convexly on the flexible screen.

Additionally, the haptic actuators are activated with an intensity corresponding to "level=2" for the text and the portion occupied by a text of "Title of Menu" is presented convexly on the flexible screen.

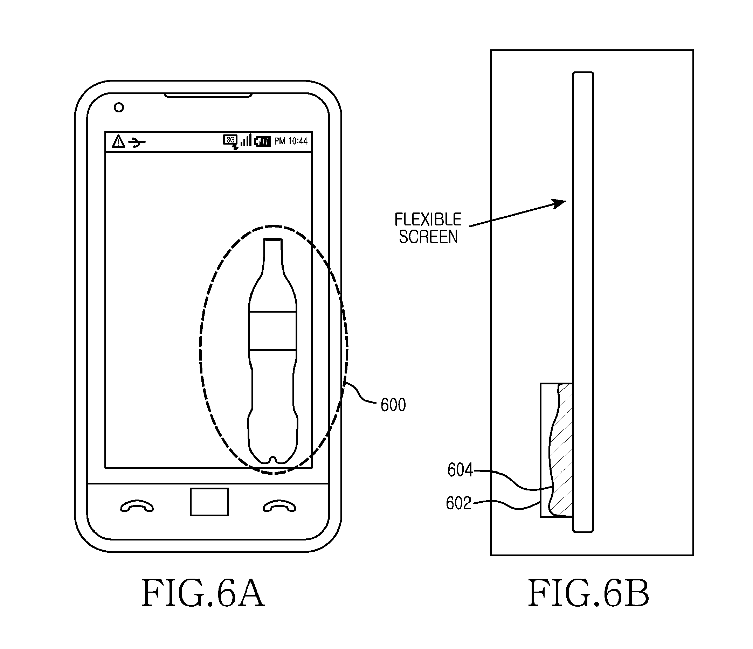

With reference to Fig. 6, in one example wherein all haptic actuators of an area occupied by an image or text are operated with the same intensity, the image or text becomes convex in the same size as denoted by reference numeral '602' of FIG. 6. In another example wherein more complicated physical emphasis for the object is presented on the flexible screen as denoted by reference numeral '604' of FIG. 6, corresponding HTML5 tags can be composed as in Table 2 below.

**Table 2**

| Sample HTML5 Tags (Raised Square) |
|---|
| <haptic src= 'http://www.website.com/image.gif' width= '100' height= '100' hapticmap= '#imagehaptic' /> |
| <hapticmap name= "imagehaptic" |
| <area level= "1" shape= 'rect" cords= "0, 0, 100, 100" /> |
| <area level= "2" shape= 'rect" cords= "20, 20, 80, 80" /> |
| <area level= "3" shape= 'rect" cords= "40, 40, 60, 60" /> |
| </hapticmap> |

Here, the 'coords' type is used in an 'area' element, and provides a coordinate to a shape, which the 'shape' type describes. For example, the 'shape' type is defined as "circle", "polygon", "rectangle" and the like. In a 'circle' state, it declares three integers on the 'coords' type. A 1st integer indicates the center of a circle from the first left edge in pixel units, and a 2nd integer indicates a distance of the top to the center of the circle in pixel units and a 3rd integer, the last numeral, indicates a radius of the circle in pixel units. In a 'polygon' state, it declares six integers to the minimum. A pair of even-numbered integers indicates a distance from the left and top corner of an image in pixel units. In a 'rectangle' state, it declares four integers. The four integer values each indicate a distance between corner regions in pixel units.

That is, the "image.gif' of the 100×100 size being in "http://www.website.com" can define different intensities for haptic actuators corresponding to the coordinate values of three 'rectangle' types. For example, for haptic actuators at coords= "0, 0, 100, 100" an intensity of level 1 is applied, for coords= "20, 20, 80, 80" an intensity of level 2 is applied, and for coords= "40, 40, 60, 60" an intensity of level 3 is applied. If the "image.gif" of the 100×100 size being in "http://www.website.com" are divided into more coordinate values, the "image.gif" can be presented more minutely on the flexible screen.

When it is it is determined in step 302 that there are no tagged objects for physical emphasis among the objects configuring the corresponding web page as in exemplary Table 1 or exemplary Table 2 above, the electronic device jumps to step 310.

Alternatively, if it is determined in step 302 that there are the objects tagged for physical emphasis in the objects forming web page as in exemplary Table 1 or exemplary Table 2 above, the electronic device proceeds to step 304 and extracts object shapes and locations for the objects tagged for physical emphasis.

After that, in step 306, the electronic device sets the intensities and/or states for haptic actuators corresponding to the objects tagged for physical emphasis.

Next, in step 308, the electronic device displays the web page which is deformed by the haptic actuators activated with the intensities and/or states, as illustrated in FIG. 6.

After that, in step 310, the electronic device determines duration of physical emphasis for the objects on the flexible screen. When it is determined in step 310 that there are no objects with physical emphasis, the electronic device proceeds to step 312. Alternatively, when it is determined in step 310 that there are the objects tagged for physical emphasis, the electronic device returns to step 304.

In step 312, the electronic device resets the actuator states to the neutral state. That is, the electronic device restores the deformed screen for physical emphasis to a flat screen. Next, if Internet browsing is continuously performed, the electronic device returns to step 300 (in step 314). And, when the Internet browsing is terminated, i.e., when a user ends web surfing, the electronic device can terminate the procedure of the present disclosure.

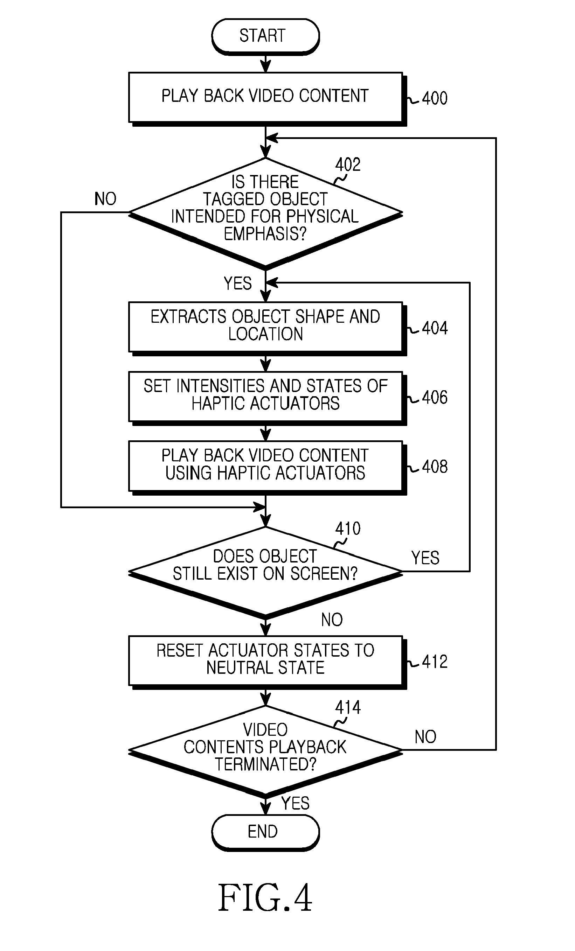

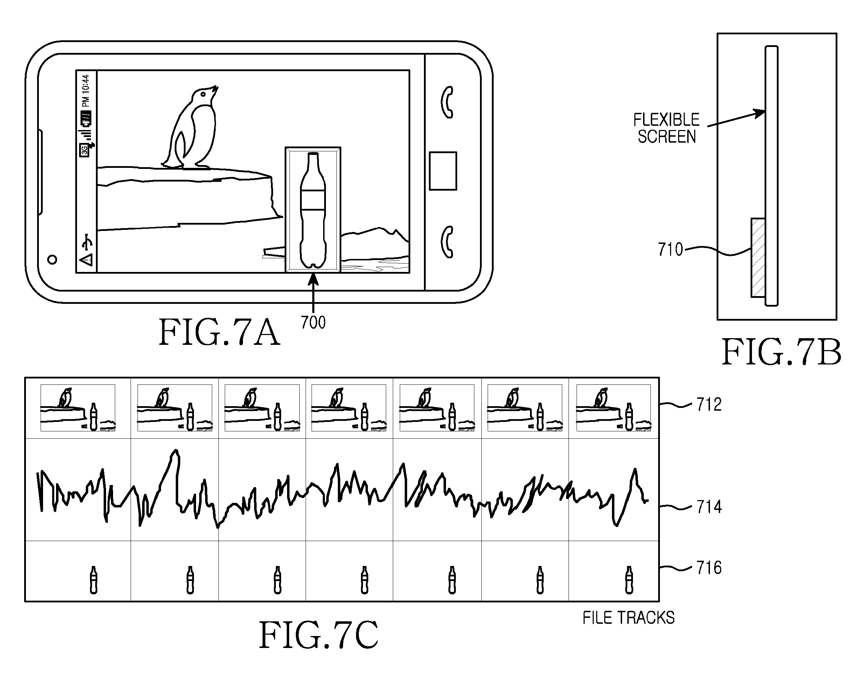

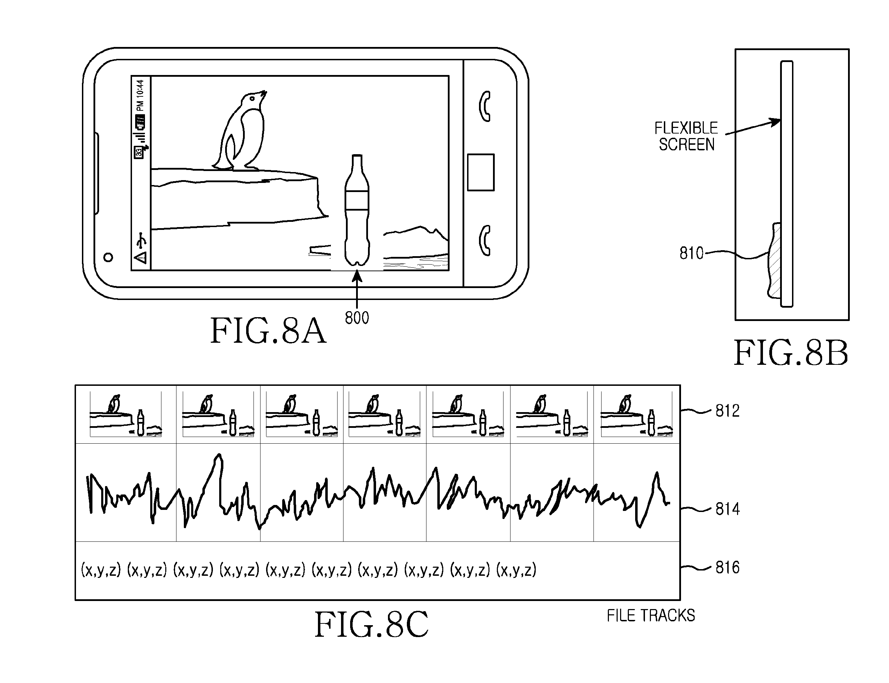

FIG. 4 illustrates a procedure for displaying in an electronic device according to a second exemplary embodiment of the present disclosure. With reference to FIG. 4, when playing back visual content in step 400, the electronic device proceeds to step 402 and determines if there are objects tagged for physical emphasis in the visual content. The visual content includes pixel information emphasizing a corresponding object in every video frame, such that the electronic device activates haptic actuators to physically deform a flexible screen and to physically trigger a 3D effect as described with reference to FIG. 7 and FIG. 8 below.

When it is determined in step 402 that there is no pixel information requiring physical emphasis within the video frame, the electronic device jumps to step 410.
When it is determined in step 402 that there is pixel information requiring physical emphasis physically in the video frame, the electronic device proceeds to step 404 and extracts an object shape and location from the pixel information. For example, the electronic device calculates a location and/or a size of an object intended for physical emphasis in every frame and duration information of physical emphasis.

After that, in step 406, the electronic device sets the intensities and states for haptic actuators, using the pixel information with physical emphasis in every frame of the visual content.

Next, in step 408, the electronic device displays the corresponding web page according to the set intensities and states of the haptic actuators as illustrated in FIG. 7.

After that, in step 410, the electronic device determines if the object intended for physical emphasis still exists. When it is determined in step 410 that there are no longer any objects intended for physical emphasis, the electronic device proceeds to step 412. When it is judged in step 410 that there is an object intended for physical emphasis, the electronic device returns to step 404.

In step 412, the electronic device resets the actuator states to neutral states. That is, the electronic device restores the deformed screen for physical emphasis to a flat screen.

Next, if the video content playback is continuously performed in step 414, the electronic device returns to step 402. When the video content playback is ended in step 414, the electronic device terminates the procedure according to the present disclosure.

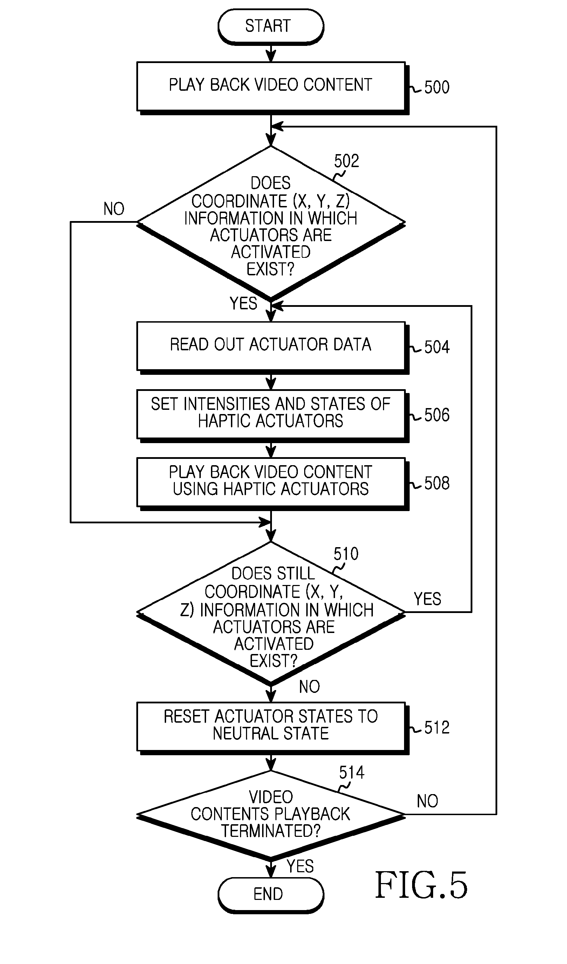

FIG. 5 illustrates a procedure for displaying on an electronic device according to a third exemplary embodiment of the present disclosure. With reference FIG. 5, when playing back video content in step 500, the electronic device proceeds to step 502 and determines if coordinate (x, y, z) information at which haptic actuators are to be activated exist in the video content. The video content includes pixel information including a coordinate (x, y, z) in every video frame, such that the electronic device activates the haptic actuators to physically deform a flexible screen and physically trigger a 3D effect as described with reference to FIG. 8 below. Here, the 'x' and the 'y' are 2D location coordinate values of a pixel, and the 'z' is a height or depth. That is, the 'z' determines an intensity of the haptic actuator which is located to the coordinate (x, y).

When it is judged in step 502 that there is no pixel information including the coordinates (x, y, z) in any video frame, the electronic device jumps to step 510.

When it is determined in step 502 that there is pixel information including the coordinate (x, y, z) in every frame of the visual content, the electronic device proceeds to step 504 and reads out actuator data using the pixel information including the coordinates (x, y, z) for every video frame.

After that, in step 506, the electronic device confirms the intensities and states of haptic actuators according to the pixel information including the coordinate (x, y, z) in every frame of the visual content.

Next, in step 508, the electronic device displays the video content by deforming the screen based on the intensities and states of the haptic actuators as illustrated in FIG. 8.

After that, in step 510, the electronic device determines if there is still coordinate (x, y, z) information in which haptic actuators are activated. When it is determined in step 510 that there is not the coordinate (x, y, z) information in which the haptic actuators are activated, the electronic device proceeds to step 512. When it is determined in step 510 that there is coordinate (x, y, z) information in which the haptic actuators are activated, the electronic device returns to step 504.

In step 512, the electronic device resets the actuator states to neutral states. That is, the electronic device restores the deformed screen by the activated haptic actuators to the screen with original state.

Next, if the video content playback is continuously performed in step 514, the electronic device returns to step 502. When the video content playback is ended in step 514, the electronic device terminates the procedure according to the present disclosure.

FIGs. 6A and 6B illustrate an example of displaying a web page scene according to a first exemplary embodiment of the present disclosure.

Referring to FIG. 6A, a bottle-shape image 600 within a corresponding web page can be presented stereoscopically on a flexible screen through tagging for 3D effect as in exemplary Table 1 or exemplary Table 2.

Referring to FIG. 6B, from the side of the flexible screen, the flexible screen is protruded convexly as much as a bottle size as denoted by reference numeral 602, when a user applies the same intensities of haptic actuators to the whole image as in exemplary Table 1 above.

For another example, the flexible screen is protruded convexly like a bottle shape as denoted by reference numeral 604, when the user applies intensities of haptic actuators to an image according to coordinate values as in Table 2 above.

On the other hand, in user aspects, the user can push, touch, or push-and-drag an object of a bottle shape convexly protruding, or squeeze or pinch the bottle-shaped object on its two edge surfaces with two fingers on the flexible screen.

FIGs. 7A, 7B and 7C 7 illustrate an example of displaying a website scene according to a second exemplary embodiment of the present disclosure.

With reference to FIG. 7C, visual content comprises a video data 712, an audio data 714, and an emphasis effect data 716. When the content provider intends to emphasize a drink bottle 700 as in Fig. 7A, the emphasis effect data 716 includes a location and a size of the drink bottle 700 to be displayed in each visual frame. Then, the flexible screen deforms the drink bottle portion of the screen based on the emphasis effect data as denoted by reference numeral 710 as in Fig. 7B, when a user plays back the visual content.

FIGs. 8A, 8B and 8C illustrate an example of displaying a website scene according to a third exemplary embodiment of the present disclosure. With reference to FIG. 8C, video content comprises a video data 812, an audio data 814, and an emphasis effect data 816. When a content provider intends to emphasize a drink bottle 800 as illustrated in Fig. 8A, the emphasis effect data 816 can include coordinates (x, y, z) of pixels of a flexible screen displaying the drink bottle 800 in each frame. Here, the 'x' and the 'y' are 2D location coordinate values of the pixels, and the 'z' is a height or depth. That is, the 'z' determines an intensity of the haptic actuator.

The flexible screen deforms the screen to have a protruded bottle shape as denoted by reference numeral 810 as in Fig. 8B when a user plays back the video content.

Methods according to exemplary embodiments disclosed in claims and/or the specification of the present disclosure can be implemented in a form of hardware, software, or a combination of hardware and software.

In case of implementing in software, a computer readable storage medium storing one or more programs (i.e., software modules) can be provided. One or more programs stored in the computer readable storage medium are configured to be executable by one or more processors within an electronic device. One or more programs include instructions for enabling the electronic device to execute the methods according to the exemplary embodiments disclosed in the claims and/or the specification of the present disclosure.

These programs (i.e., software modules or software) can be stored in a Random Access Memory (RAM), a nonvolatile memory including a flash memory, a Read Only Memory (ROM), an Electrically Erasable Programmable ROM (EEPROM), a magnetic disk storage device, a Compact Disk ROM (CD-ROM), a Digital Versatile Disk (DVD) or an optical storage device of other form, and a magnetic cassette. Or, they can be stored in a memory configured by a combination of some or all of them. Also, each configuration memory may be included in plural.

Further, the programs can be stored in an attachable storage device accessible to an electronic device through a communication network such as the Internet, an intranet, a Local Area Network (LAN), a Wireless LAN (WLAN), or a Storage Area Network (SAN), or a communication network configured by a combination of them. This storage device can access the electronic device through an external port.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Furthermore, a separate storage device on a communication network may access the portable electronic device.

As described above, there is an advantage of, at video playback or website visit, controlling a flexible display concavely or convexly according to a height of a haptic actuator, which is set every pixel of an object or scene tagged for emphasis, thereby being capable of presenting the object more stereoscopically.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the disclosure has been shown and described with reference to certain preferred embodiments thereof, it will be understood by those skilled in the art that various changes in form and details may be made therein without departing from the scope of the disclosure as defined by the appended claims.

## Claims

1. A display method for an electronic device, the method comprising:
displaying visual content which comprises one or more objects intended for emphasis effect, on a flexible screen; and
deforming at least part of the flexible screen on which the one or more objects intended for emphasis effect are displayed.

2. The method of claim 1, wherein deforming the at least part of the flexible screen on which the at least one or more objects intended for emphasis are displayed comprises:
analyzing tag information which comprises a location of an object intended for emphasis for each frame of the visual content, and a duration of the emphasis;
extracting locations and shapes of the at least one or more objects intended for emphasis based on the tag information; and
activating at least one or more actuators, using the locations and shapes of the at least one or more objects intended for emphasis,
wherein at least part of the flexible screen is deformed convexly or concavely by the activated at least one or more actuators.

3. The method of claim 1 or claim 2, wherein deforming the at least part of the flexible screen on which the at least one or more objects intended for emphasis are displayed comprises:
analyzing pixel information which comprises a coordinate (x, y, z) for the object in each frame of the visual content;
extracting locations and shapes of the at least one or more objects intended for emphasis based on the pixel information; and
activating at least one or more actuators, using the locations and shapes of the at least one or more objects intended for emphasis;
wherein at least part of the flexible screen is deformed convexly or concavely by the activated at least one or more actuators.

4. The method of claim 3, wherein the 'x' and the 'y' are 2-Dimensional, 2D, location coordinate values of pixels, and the 'z' is a height determining an intensity value indicating the magnitude of movement for an actuator corresponding to 2D coordinate (x, y).

5. The method of any one of the preceding claims, further comprising undeforming the region on which the at least one or more objects intended for emphasis are displayed.

6. The method of claim 1, wherein the visual content comprises a web page displayed on the flexible screen through a web browser.

7. The method of claim 6, wherein deforming the at least part of the flexible screen on which the at least one or more objects intended for emphasis are displayed comprises:
analyzing tag information within a Hyper Text Markup Language, HTML, code corresponding to the web page;
extracting locations and shapes of the at least one or more objects intended for emphasis based on the tag information; and
activating at least one or more actuators, using the locations and shapes of the at least one or more objects intended for emphasis;
wherein the flexible screen is deformed convexly or concavely by the activated at least one or more actuators.

8. The method of claim 7, wherein the tag information comprises intensity values indicating the magnitude of movement for corresponding actuators.

9. The method of claim 6, wherein, if the at least one object is divided into a plurality of regions, for each of the plurality of regions, tag information corresponding to the web page comprises an intensity value indicating a magnitude of movement for a corresponding actuator to be applied, a shape of the object within the each region, and coordinate information for the shape of the region.

10. The method of any one of claims 6 to 9, further comprising undeforming the part on which the at least one or more objects intended for emphasis are displayed.

11. The method of any one of claims 6 to 10, wherein the object is one of an image and a text.

12. An electronic device, comprising:
one or more processors;
memory; and
one or more programs, wherein the one or more programs are stored in the memory and configured to cause, when executed by the electronic device, the electronic device to perform the method of any of claims 1 to 11.
